# EUROPEAN PATENT APPLICATION

(11) **EP 4 675 878 A1**
(43) Date of publication of application: **07.01.2026**
(21) Application number: 24186357.0
(22) Date of filing: 03.07.2024
(51) Int. Cl.: H02J 3/30, H02P 9/10

(54) **ROTATING STABILISERS**

(71) Applicant: GE Energy Power Conversion Technology Limited, Rugby, Warwickshire CV21 1BD (GB)
(72) Inventor: Mirahki, Hooshang, Rugby CV21 1BD (GB); Patel, Vipulkumar, Rugby CV21 1BD (GB); Fobbester, Jonathan, Rugby CV21 1BD (GB)
(74) Representative: Serjeants LLP

(57) **Abstract**

A rotating stabiliser (100) is described. The rotating stabiliser (100) is electrically connectable to a power grid (200), and includes a synchronous condenser (102), a starter/exciter (116), and a power converter (126). The synchronous condenser (102) includes a stator assembly (104) with a stator winding that is electrically connectable to the power grid (200), and a rotor assembly (108) with a rotor winding. The starter/exciter (116) includes a stator assembly (118) with a stator winding and a rotor assembly (120) with a rotor winding. The rotor assemblies (108, 120) are mechanically connected by a rotor shaft (110). A power converter (122) of the starter/exciter (116) is electrically connected to the rotor windings of the synchronous condenser (100) and starter/exciter (116) and is mounted for rotation on the rotor shaft (100). The power converter (126) has first terminals (138a, 138b, 138c) electrically connectable to the power grid (200) and second terminals (140a, 140b, 140c) electrically connected to the stator winding of the starter/exciter (116).

## Description

### Technical Field

The present invention relates to rotating stabilisers, and in particular to rotating stabilisers that include a synchronous condenser (or synchronous compensator) that is electrically connected to a power grid or network.

### Background Art

It is known to use a synchronous condenser to support a power grid with short-circuit power capacity and reactive power to mitigate voltage fluctuations and minimise disturbance during grid fault conditions, for example. A synchronous condenser is an unloaded synchronous rotating machine that is synchronised to the power grid. In other words, unlike a conventional synchronous rotating machine, a synchronous condenser is operated without any mechanical load connected to its rotor assembly so there is no conversion of mechanical energy to electrical energy or *vice versa.* A synchronous condenser can help to stabilise the power grid by generating or absorbing reactive power for grid voltage regulation, and provides rotating inertia to stabilise grid frequency.

A typical synchronous condenser includes a stator assembly with a stator winding that is electrically connected to the power grid or network, optionally by means of a transformer. A synchronous condenser also includes a rotor assembly with a rotor winding. The power grid is normally a three-phase power grid that provides a three-phase alternative current (AC) supply to the stator winding, which generates a rotating magnetic field within the machine. At the same time, the rotor winding of the rotor assembly is typically excited by a direct current (DC) current. When operating under no-load conditions and in an under-excited mode, a synchronous condenser will absorb reactive power from the power grid. This is useful when there is an excess of reactive power in the system. When operating in an over-excited mode, a synchronous condenser will supply reactive power to the power grid. This may help with voltage control and power factor correction. A synchronous condenser may therefore behave at its stator terminals as if it were a three-phase inductor or capacitor, changing from one to the other according to the rotor excitation. Substantially no active power is transferred between a synchronous condenser and the power grid.

A synchronous condenser may contribute to the overall stability of the power grid by providing dynamic support, e.g., help to dampen oscillations and can help main stable grid operation during faults or other disturbances.

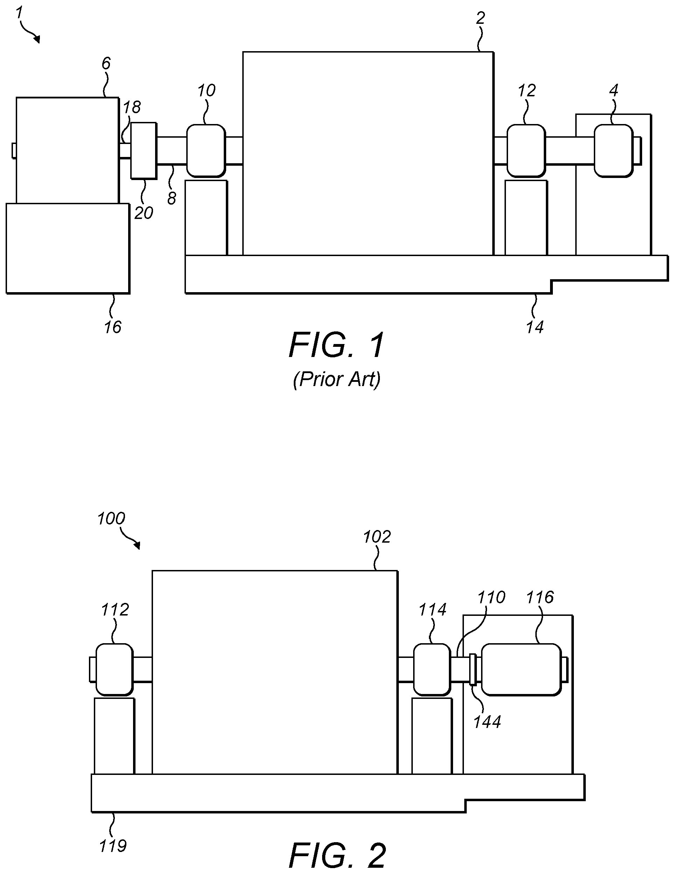

A typical rotating stabiliser 1 is shown in Figure 1 and includes a synchronous condenser 2, an exciter 4, and an auxiliary motor 6 (sometimes called a "pony motor"). The rotor assembly of the synchronous condenser 2 includes a rotor shaft 8 that is supported at a driven end by a first bearing 10 and at a non-driven end by a second bearing 12. The synchronous condenser 2 and the bearings 10, 12 are mounted on a base plate 14. The exciter 4 is typically located at the non-driven end and at least part of the exciter may be formed as part of the rotor shaft 8 - i.e., at least part of the exciter may rotate with the rotor shaft. The stationary part of the exciter 4 may also be mounted on the base plate 14 as shown in Figure 1. The exciter 4 controls the magnetic field strength in the rotor assembly, e.g., by controlling the DC current supplied to the rotor winding, to regulate the reactive power output of the synchronous condenser 2.

The auxiliary motor 6 is typically located at the driven end of the rotor shaft 8. The auxiliary motor 6 is located on a separate base plate 16 (or concrete foundation), but may also be mounted on the same base plate 14 as the synchronous condenser. The auxiliary motor 6 may have any suitable construction and includes a rotor shaft 18. During a starting sequence of the rotating stabiliser 1, the auxiliary motor 6 is driven to rotate the rotor assembly of the synchronous condenser 2 to a rated rotational speed. The rotor shaft 18 of the auxiliary motor 6 is therefore coupled to the driven end of the rotor shaft 8 of the synchronous condenser 2, e.g., by means of a suitable mechanical coupling 20 or a clutch mechanism. When the synchronous condenser 2 reaches its rated rotational speed, it may be uncoupled from the auxiliary motor 8 (or the auxiliary motor 8 may be operated in a de-energised mode) so that the synchronous condenser 2 runs in an unloaded condition and is synchronised to the power grid. Depending on the physical size of the synchronous condenser 2 and the auxiliary motor 6, the total footprint of the rotating stabiliser 1 (i.e., including both of the base plates 14 and 16) can be very large. For example, the length of the footprint may be more than 11 metres in some cases.

There is a need for an improved rotating stabiliser with a smaller footprint and a simpler overall construction.

### Summary of the invention

The invention provides an improved rotating stabiliser that is electrically connectable to a power grid, e.g., a three-phase power grid or network. The rotating stabiliser comprises:
a synchronous condenser comprising:
   a first stator assembly with a first stator winding that is electrically connectable to the power grid, and
   a first rotor assembly with a first rotor winding;
a starter/exciter comprising:
   a second stator assembly with a second stator winding,
   a second rotor assembly with a second rotor winding, wherein the second rotor assembly is mechanically coupled to the first rotor assembly by a rotor shaft, and
   a first power converter having first terminals electrically connected to the first rotor winding and second terminals electrically connected to the second rotor winding, wherein the first power converter is mounted for rotation on the rotor shaft; and
a second power converter having first terminals electrically connectable to the power grid and second terminals electrically connected to the second stator winding.

The starter/exciter is provided as an integrated component that replaces the separate auxiliary motor and exciter of known rotating stabilisers. In other words, the improved rotating stabiliser of the present invention has no auxiliary motor (or "pony motor") and no other way of applying a starting torque to the rotor assembly of the synchronous condenser during a starting sequence of the rotating stabiliser.

The starter/exciter functions as a motor (or "starter") during a starting sequence of the rotating stabiliser, where it is used to rotate the first rotor assembly of the synchronous condenser from standstill to a predefined rotational speed, and subsequently functions as an exciter, where it controls rotor excitation during normal operation of the rotating stabiliser - i.e., where the synchronous condenser is operated in an under-excited mode, an over-excited mode, or a normal-exited mode as required. As explained above, in an under-excited mode the synchronous condenser operates with a leading condition and will absorb reactive power from the power grid, and in an over-excited mode the synchronous condenser operates with a lagging condition and will supply reactive power to the power grid.

The improved rotating stabiliser has a significantly smaller footprint than known rotating stabilisers that require a separate auxiliary motor. For example, it may be possible to reduce the length of the footprint from about 11 metres to about 8 metres.

Eliminating the separate auxiliary motor also eliminates the need to service and maintain the auxiliary motor (e.g., bearing re-greasing or replacement), which reduces planned shutdowns of the rotating stabiliser. Acoustic noise is reduced. Significant cost savings can be made by eliminating the auxiliary motor, mechanical shaft coupling, separate motor drive etc. and combining the functionality of the auxiliary motor with the exciter. A separate automatic voltage regulator (AVR) is also not needed because an inverter of the second power converter can be used for voltage control.

The synchronous condenser may have any suitable construction that will be known to the skilled person. In particular, the first stator assembly may have any suitable construction and the first stator winding may be of any suitable type and may define any suitable number of stator poles, e.g., 4, 6, 8 etc. The first stator winding may be a three-phase winding and may be electrically connected to a three-phase power grid, optionally by a transformer and/or a breaker that may be opened or closed. The first rotor assembly may have any suitable construction, e.g., a cylindrical rotor with a plurality of slots for receiving coils of the first rotor winding or a salient-pole rotor with a plurality of salient poles, and the first rotor winding may be of any suitable type and may define any suitable number of rotor poles, e.g., 2, 4, 6, 8 etc. The first rotor assembly may comprise a flywheel, or may be mechanically coupled to a flywheel, to increase the mass of the first rotor assembly. The synchronous condenser may be rated from about 10 to about 300 MVAr, or in some cases even higher.

The second stator assembly of the starter/exciter may have any suitable construction and the second stator winding may be of any suitable type and may define any suitable number of stator poles, e.g., 4, 6, 8 etc. The second stator winding may be a three-phase winding and may be electrically connected to a three-phase output of the second power converter - i.e., where the second terminals of the second power converter comprise three alternating current (AC) terminals. The second rotor assembly of the starter/exciter may have any suitable construction (e.g., a cylindrical rotor with a plurality of slots for receiving coils of the second rotor winding) and the second rotor assembly may define any suitable number of rotor poles, e.g., 4, 6, 8 etc. The second rotor winding may be a three-phase winding.

The first power converter may be a rectifier, e.g., a three-phase diode rectifier. The first terminals of the first power converter may comprise two direct current (DC) terminals that are electrically connected to the first rotor winding of the synchronous condenser so that the first rotor winding is excited by a DC current supplied by the first power converter. The second terminals of the first power converter may comprise three AC terminals that are electrically connected to the second rotor winding of the starter/exciter.

The second power converter may comprise:
- a rectifier having AC terminals electrically connectable to the power grid, and DC terminals, and
- an inverter having AC terminals electrically connected to the second stator winding, and DC terminals electrically connected to the DC terminals of the rectifier.

The rectifier of the second power converter may be a three-phase diode rectifier, for example. The rectifier may have three AC terminals electrically connectable to a three-phase power grid in parallel with the first stator assembly of the synchronous condenser. The AC terminals of the rectifier may define the first terminals of the second power converter.

The inverter may have three AC terminals that may be electrically connected to a three-phase second rotor winding of the starter/exciter. The inverter may comprise a plurality of inverter legs, each inverter leg being electrically connected between the DC terminals of the inverter and defining a respective phase. Each inverter leg may comprise a plurality of controllable semiconductor switches.

A boost converter may be electrically connected between the DC terminals of the rectifier and the DC terminals of the inverter. The boost converter may comprise at least an inductor and a controllable semiconductor switch.

The rotating stabiliser may be cooled by a cooling assembly. The cooling assembly may have any suitable construction, e.g., air-cooled, water-cooled etc.

The rotating stabiliser may further comprise a controller adapted to control operation of the second power converter, e.g., control the switching of the controllable semiconductor switches of the inverter. In particular, the controllable semiconductor switches of the inverter may be switched on and off by the controller according to a suitable control strategy (e.g., a pulse width modulation (PWM) strategy) to vary the voltage at the AC terminals of the inverter.

The controller may be adapted to control operation of the second power converter based on the voltage at the second terminals of the second power converter and/or the power grid voltage. The controller may also be adapted to control operation of the second power converter based on the rotational speed of the rotor shaft that mechanically couples the first and second rotor assemblies. The rotational speed of the rotor shaft may be measured by an encoder, for example.

The controller may be adapted to control operation of the second power converter during a starting sequence of the rotating stabiliser where:
the second power converter is operated in a motoring mode (e.g., where the second power converter operates in a positive phase sequence) to supply power from the power grid to the second stator assembly so that the starter/exciter is operated as a motor to rotate the first rotor assembly of the synchronous condenser from standstill to a predefined rotational speed that is higher than a rated rotational speed of the synchronous condenser,
when the synchronous condenser reaches the predefined rotational speed, the second power converter is stopped, and
the second power converter is subsequently re-started and operated in a voltage control mode (e.g., where the second power converter operates in a negative phase sequence or a positive phase sequence) to control the excitation of the first rotor winding.

The predefined rotational speed may be in the range of about 102% to about 108% of the rated rotational speed, for example. In particular, the predefined rotational speed may be in the range of about 103% to about 105% of the rated rotational speed. It will be understood that the rated rotational speed of the synchronous condenser will be based on the frequency of the power grid.

When the predefined rotational speed is reached, and the second power converter is stopped, the synchronous condenser operates in a free-rotating condition and its rotational speed will start to gradually decrease. The controller may then be further adapted to start to operate the second power converter in a voltage control mode (e.g., where the second power converter operates in a negative phase sequence or a positive phase sequence) and excitation of the first rotor winding of the synchronous condenser is increased to achieve substantially the rated voltage at the terminals of the first stator winding of the synchronous condenser. In other words, after being stopped, the second power converter may be re-started by the controller and operated in a voltage control mode, including during the process of synchronising the synchronous condenser to the power grid mentioned below. As noted above, when the synchronous condenser is electrically connected to the power grid, the second power converter may be operated with either a negative or positive phase sequence. When connected to a positive phase sequence, the rotor frequency is low and the input voltage is high. When connected to a negative phase sequence, the rotor frequency is high and the input voltage is low. For a fast response, a negative phase sequence may be preferred. But if there are limitations on the input voltage, for example, a positive phase sequence may be more suitable.

As the rotational speed of the synchronous condenser continues to decrease, the terminal voltage, rotational speed and phase are synchronised to the power grid. After the synchronous condenser and the power grid are synchronised, a breaker that is electrically connected between the first stator winding of the synchronous condenser and the power grid may be closed.

If synchronisation is not achieved, the above starting sequence may be repeated, but where the first rotor assembly of the synchronous condenser is rotated from its current rotational speed and not from standstill. If the above starting sequence is repeated, the first rotor assembly may be rotated by the starter/exciter to a second predefined rotational speed that is higher than the rated rotational speed of the synchronous condenser. The second predefined rotational speed may be the same as, or higher than, the predefined rotational speed using when the synchronous condenser is rotated from standstill.

After the synchronous condenser has been synchronised to the power grid, i.e., after the starting sequence has been completed, the controller may be adapted to control operation of the second power converter to control excitation of the first rotor winding during normal operation of the rotating stabiliser, i.e., so that the synchronous condenser is operated in an under-excited mode, an over-excited mode, or a normal-excited mode as required. The second power converter (and in particular, the inverter) is therefore operated as an automatic voltage regulator (AVR) and may be operated in a voltage control mode (e.g., with a negative phase sequence or a negative phase sequence) to control the DC current supplied to the first rotor winding through the first power converter. It will be understood that the DC current will depend on the AC current that is generated in the second rotor winding, which depends in turn on the AC current that is supplied to the second stator winding by the second power converter. The controller may therefore control the DC current supplied to the first rotor winding, i.e., control excitation of the synchronous condenser, by controlling the voltage at the AC terminals of the second power converter.

### Drawings

Figure 1 is a schematic view of a known rotating stabiliser with an auxiliary motor;
Figure 2 is a schematic view of a rotating stabiliser according to the present invention;
Figure 3 is a schematic view of the electrical circuit of the rotating stabiliser;
Figure 4 is a flow diagram of control of the second power converter during a starting sequence of the rotating stabiliser;
Figure 5 is a flow diagram of a general starting sequence;
Figure 6 is a graph of speed versus torque during a starting sequence of the rotating stabiliser; and
Figure 7 is a graph of speed versus field current and stator V/f ratio during a starting sequence of the rotating stabiliser.

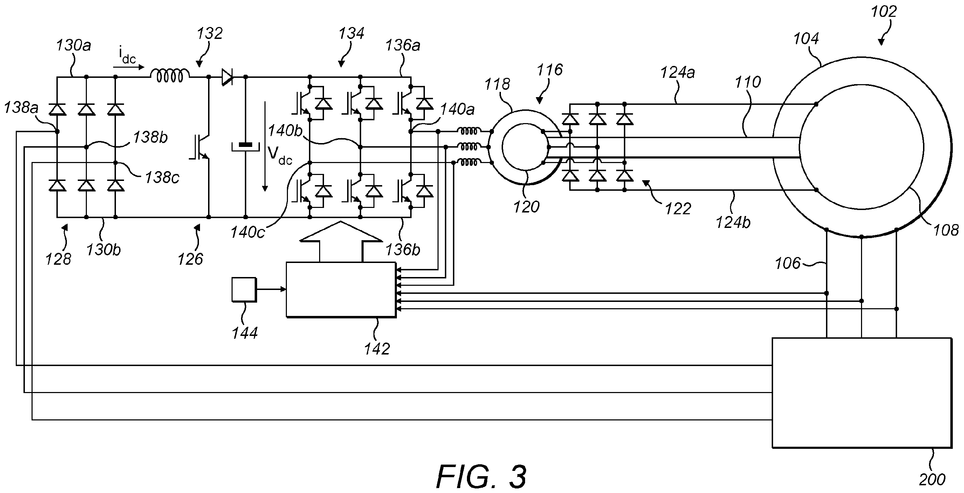

Figures 2 and 3 show an improved rotating stabiliser 100 according to the present invention that is electrically connected to a three-phase power grid 200.

The rotating stabiliser 100 includes a synchronous condenser 102. The synchronous condenser includes a stator assembly 104 with a three-phase stator winding (not shown) that is electrically connected to the power grid 200 by a three-phase alternating current (AC) connection 106. Although not shown, it will be understood that the AC connection 106 may include a three-phase transformer, a breaker that may be opened and closed, and any other necessary power delivery equipment. When the breaker is closed, the three-phase stator winding of the stator assembly 104 is electrically connected to the power grid 200 and when the breaker is open, the three-phase stator winding of the stator assembly 104 is electrically isolated from the power grid 200.

The stator assembly 104 may have any suitable construction. In particular, the three-phase stator winding of the stator assembly 104 may be of any suitable type and may define any suitable number of stator poles, e.g., 4, 6, 8 etc. for the stator assembly 104.

The synchronous condenser 102 also includes a rotor assembly 108 with a direct current (DC) rotor winding (not shown). The rotor assembly 108 may have any suitable construction, e.g., a cylindrical rotor with a plurality of slots for receiving coils of the DC rotor winding or a salient-pole rotor with a plurality of salient poles. The DC rotor winding of the rotor assembly 108 may be of any suitable type and may define any suitable number of rotor poles, e.g., 2, 4, 6, 8 etc. for the rotor assembly 108. Although not shown, the rotor assembly 108 may comprise a flywheel, or may be mechanically coupled to a flywheel, to increase the mass of the rotor assembly.

The rotor assembly 108 of the synchronous condenser 102 includes a rotor shaft 110 that is supported at a first end by a first bearing 112 and at a second end by a second bearing 114 and which mechanically couples the rotor assembly 108 to the rotor assembly 120 of a starter/exciter 116 - see below. The synchronous condenser 102, the bearings 112, 114 and the stationary part of the starter/exciter 116 are mounted on a base plate 119. Figures 1 and 2 are intended to show that the base plate 119 has a smaller footprint than the total footprint of the base plate 14 and foundation 16 for the same sized synchronous condenser. This is because the auxiliary motor 6 is no longer required. Figures 1 and 2 are also intended to show that the starter/exciter 116 will normally be slightly larger than the known exciter 4, but even so there is still a significant reduction in the footprint of the base plate 119.

The starter/exciter 116 includes a stator assembly 118 with a three-phase stator winding (not shown). The stator assembly 118 may have any suitable construction. In particular, the three-phase stator winding of the stator assembly 118 may be of any suitable type and may define any suitable number of stator poles, e.g., 4, 6, 8 etc. for the stator assembly 118.

The starter/exciter 116 includes a rotor assembly 120 with a three-phase rotor winding (not shown). The rotor assembly 120 may have any suitable construction (e.g., a cylindrical rotor with a plurality of slots for receiving coils of the rotor winding) and the three-phase rotor winding may define any suitable number of rotor poles, e.g., 4, 6, 8 etc. for the rotor assembly 120.

The starter/exciter 116 includes a first power converter, e.g., a three-phase diode rectifier 122. The rectifier 122 includes three phase legs, each phase leg having a pair of diodes electrically connected in series between a pair of DC rails 124a, 124b. Each phase leg is electrically connected to a respective phase of the three-phase rotor winding of the rotor assembly 120. This is shown schematically in Figure 3. The DC rails 124a, 124b are electrically connected to the DC rotor winding of the rotor assembly 108 of the synchronous condenser 102. This is also shown schematically in Figure 3. The rectifier 122 is mounted to the rotor shaft 110 for rotation therewith.

The rotating stabiliser 100 includes a second power converter 126. The second power converter 126 includes a three-phase diode rectifier 128. The rectifier 128 includes three phase legs, each phase leg having a pair of diodes electrically connected in series between a pair of DC rails 130a, 130b. Each phase leg is electrically connected to a respective phase of the power grid 200. The second power converter 126 includes a DC/DC boost converter 132 electrically connected to the rectifier 128, i.e., to the pair of DC rails 130a, 130b. As shown in Figure 3, the boost converter 132 may include an inductor, a controllable semiconductor switch and a diode, for example.

The second power converter 126 also includes a three-phase inverter 134. The inverter 134 includes three inverter legs, each inverter leg having a pair of controllable semiconductor switches electrically connected in series between a pair of DC rails 136a, 136b. The DC rails 136a, 136b are electrically connected to the DC/DC boost converter 132 by a DC link that includes a capacitor. Each inverter leg of the inverter 134 is electrically connected to a respective phase of the three-phase stator winding of the stator assembly 118 of the starter/exciter 116, optionally by means of a phase inductor as shown in Figure 3.

The second power converter 126 therefore includes first AC terminals 138a, 138b and 138c that are electrically connected to the three-phase power grid 200 and second AC terminals 140a, 140b and 140c that are electrically connected to the three-phase stator winding of the stator assembly 118 of the starter/exciter 116.

The starter/exciter 116 is provided as an integrated component that replaces the separate auxiliary motor 6 and exciter 4 of known rotating stabilisers as shown in Figure 1. In other words, the improved rotating stabiliser 100 of the present invention has no auxiliary motor (or "pony motor") and no other way of applying a starting torque to the rotor assembly 108 of the synchronous condenser 102 during a starting sequence of the rotating stabiliser 100.

The starter/exciter 116 functions as a motor (or "starter") during a starting sequence of the rotating stabiliser 100, where it is used to rotate the rotor assembly 108 of the synchronous condenser 102 from standstill to a predefined rotational speed, and subsequently functions as an exciter, where it controls rotor excitation during normal operation of the rotating stabiliser 100 - i.e., where the synchronous condenser 102 is operated in an under-excited mode, an over-excited mode, or a normal-exited mode as required. As explained above, in an under-excited mode the synchronous condenser 102 operates with a leading condition and will absorb reactive power from the power grid 200, and in an over-excited mode the synchronous condenser 102 operates with a lagging condition and will supply reactive power to the power grid 200.

The rotating stabiliser 100 also includes a controller 142 adapted to control operation of the second power converter 126, e.g., control the switching of the controllable semiconductor switches of the inverter 134. In particular, the controllable semiconductor switches of the inverter 134 may be switched on and off by the controller 142 according to a suitable control strategy (e.g., a pulse width modulation (PWM) strategy) to vary the voltage at the AC terminals 140a, 140b and 140c of the inverter 134.

The controller 142 is adapted to control operation of the second power converter 126 based on the voltage at the AC terminals 140a, 140b and 140c and the power grid voltage. The measured voltages that are supplied to the controller 142 are shown schematically in Fig. 3. The controller 142 is also adapted to control operation of the second power converter 126 based on the rotational speed of the rotor shaft 10 that mechanically couples the rotor assemblies 108 and 120. The rotational speed of the rotor shaft 10 may be measured by an encoder 144, for example.

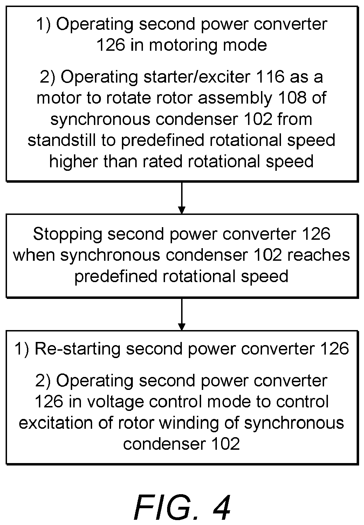

Referring to Figure 4, during a starting sequence of the rotating stabiliser 100 the second power converter 126 may be controlled by the controller 142 as follows:
- the second power converter 126 is operated in a motoring mode (e.g., where the second power converter 126 operates in a positive phase sequence) to supply power from the power grid 200 to the stator assembly 118 of the starter/exciter 116 so that the starter/exciter 116 is operated as a motor to rotate the rotor assembly 108 of the synchronous condenser 102 from standstill to a predefined rotational speed that is higher than a rated rotational speed of the synchronous condenser 102,
- when the synchronous condenser 102 reaches the predefined rotational speed, the second power converter 126 is stopped, and
- the second power converter 126 is subsequently re-started and operated in a voltage control mode (e.g., where the second power converter 126 operates in a negative phase sequence or a positive phase sequence) to control the excitation of the DC rotor winding of the rotor assembly 108 of the synchronous condenser 102.

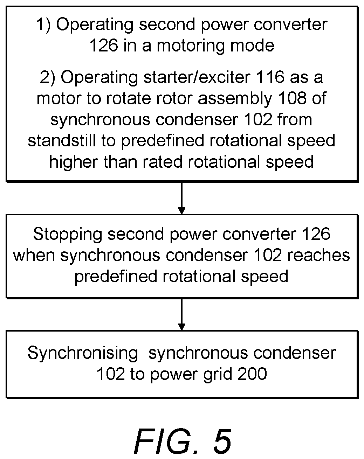

Referring to Figure 5, the starting sequence of the rotating stabiliser 100 may include the following steps:
- operating the second power converter 126 in a motoring mode to supply power from the power grid 200 to the three-phase stator winding of the stator assembly 118 so that the starter/exciter 116 is operated as a motor to rotate the rotor assembly 104 of the synchronous condenser 102 from standstill to a predefined rotational speed that is higher than a rated rotational speed of the synchronous condenser 102,
- when the synchronous condenser 102 reaches the predefined rotational speed, stopping the second power converter 126, and
- synchronising the synchronous condenser 102 to the power grid 200.

The predefined rotational speed may be in the range of about 102% to about 108% of the rated rotational speed, for example. In particular, the predefined rotational speed may be in the range of about 103% to about 105% of the rated rotational speed. It will be understood that the rated rotational speed of the synchronous condenser 102 will be based on the frequency of the power grid 200.

When the predefined rotational speed is reached, and the second power converter is stopped 126, the synchronous condenser 102 operates in a free-rotating condition and its rotational speed will start to gradually decrease. The controller 142 may then be further adapted to start to operate the second power converter 126 in a voltage control mode (e.g., where the second power converter 126 operates in a negative phase sequence or a positive phase sequence) and excitation of the DC rotor winding of the rotor assembly 108 of the synchronous condenser 102 is increased to achieve substantially the rated voltage at the terminals of the three-phase stator winding of the synchronous condenser 102. In other words, after being stopped, the second power converter 126 may be re-started by the controller 142 and operated in a voltage control mode, including during the process of synchronising the synchronous condenser 102 to the power grid 200 mentioned below.

As the rotational speed of the synchronous condenser 102 continues to decrease, the terminal voltage, rotational speed and phase are synchronised to the power grid 200. After the synchronous condenser 102 is synchronised, a breaker (not shown) that is part of the AC connection 106 may be closed to electrically connect the three-phase stator winding of the stator assembly 104 to the power grid 200.

If synchronisation is not achieved, the above starting sequence may be repeated, but where the rotor assembly 108 of the synchronous condenser 102 is rotated from its current rotational speed and not from standstill. If the above starting sequence is repeated, the rotor assembly 108 may be rotated by the starter/exciter 116 to a second predefined rotational speed that is higher than the rated rotational speed of the synchronous condenser 102. The second predefined rotational speed may be the same as, or higher than, the predefined rotational speed using when the synchronous condenser 102 is rotated from standstill.

After the synchronous condenser 102 has been synchronised to the power grid 200, i.e., after the starting sequence has been completed, the controller 142 may be adapted to control operation of the second power converter 126 to control excitation of the DC rotor winding of the rotor assembly 108 during normal operation of the rotating stabiliser 100, i.e., so that the synchronous condenser 102 is operated in an under-excited mode, an over-excited mode, or a normal-excited mode as required. The second power converter 126 (and in particular, the inverter 134) is therefore operated as an automatic voltage regulator (AVR) and may be operated in a voltage control mode (e.g., with a negative phase sequence or a negative phase sequence) to control the DC current supplied to the DC rotor winding of the rotor assembly 108 through the diode rectifier 122. It will be understood that the DC current will depend on the AC current that is generated in the three-phase rotor winding of the rotor assembly 120, which depends in turn on the AC current that is supplied to the three-phase stator winding of the stator assembly 118 by the second power converter 126. The controller 142 may therefore control the DC current supplied to the DC rotor winding of the rotor assembly 108, i.e., control excitation of the synchronous condenser 102, by controlling the voltage at the AC terminals 140a, 140b, 140c of the inverter 134.

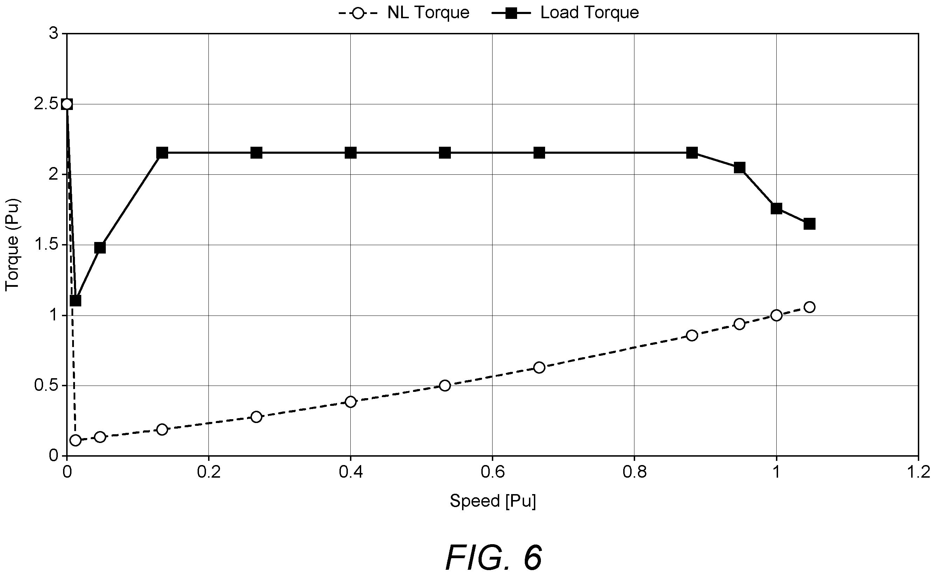

Figure 6 shows the load torque and the torque generated by the starter/exciter 116 during the starting sequence of the rotating stabiliser 100. To minimize the duration of the starting sequence, it will be important to design the starter/exciter 116 to produce the necessary torque. The size and capacity of the starter/exciter 116 are primarily determined by the torque profile required during the starting sequence. A careful balance must therefore be made in the design of the starter/exciter 116, taking into account both the efficiency of the starting sequence and the operational condition of the starter/exciter 116. This trade-off ensures that the starter/exciter 116 is not only capable of meeting the torque demands, but that it also operates within safe and optimal conditions in the exciter mode. Additionally, optimising the design of the starter/exciter 116 may lead to improvements in overall system performance and reliability. This is because it directly influences the effectiveness and duration of the starting sequence.

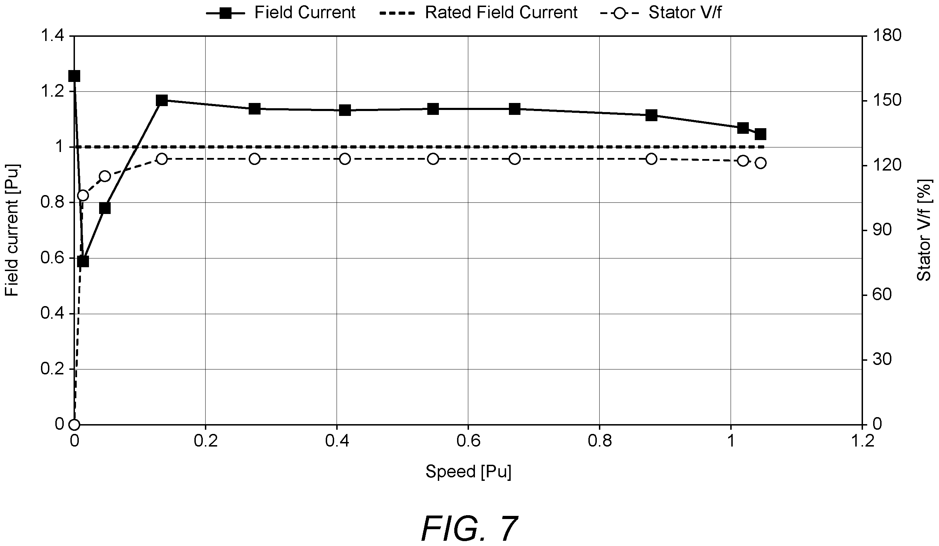

Figure 7 shows the field current of the synchronous condenser 102 during the starting sequence. Because the rotor winding of the synchronous condenser 102 is electrically connected to the starter/exciter 116 during the starting sequence, the voltage of the synchronous condenser 102 increases with the increase in rotational speed and field current. Therefore, when designing the starter/exciter 116, it may be important to monitor the volts per hertz (V/f) ratio in the synchronous condenser 102 during the starting sequence. Additionally, the thermal limitations of the rotor assembly 108 must also be considered. Ensuring that these parameters are within safe limits may be important to prevent damage and ensure the longevity of the synchronous condenser 102. The design process should incorporate thorough checks and balances to maintain optimal performance and avoid overheating or electrical stress on the rotor assembly 108 of the synchronous condenser 102. By carefully evaluating and addressing these factors, the reliability and efficiency of the overall rotating stabiliser 100 may be significantly enhanced, leading to a smoother and more effective starting sequence.

## Claims

1. A rotating stabiliser (100) electrically connectable to a power grid (200), the rotating stabiliser (100) comprising:
a synchronous condenser (102) comprising:
a first stator assembly (104) with a first stator winding that is electrically connectable to the power grid (200), and
a first rotor assembly (108) with a first rotor winding;
a starter/exciter (116) comprising:
a second stator assembly (118) with a second stator winding,
a second rotor assembly (120) with a second rotor winding, wherein the second rotor assembly (120) is mechanically connected to the first rotor assembly (108) by a rotor shaft (110), and
a first power converter (122) having first terminals electrically connected to the first rotor winding and second terminals electrically connected to the second rotor winding, wherein the first power converter (122) is mounted for rotation on the rotor shaft (110); and
a second power converter (126) having first terminals (138a, 138b, 138c) electrically connectable to the power grid (200) and second terminals (140a, 140b, 140c) electrically connected to the second stator winding.

2. A rotating stabiliser (100) according to claim 1, wherein the first power converter (122) is a rectifier.

3. A rotating stabiliser (100) according to claim 1 or claim 2, wherein the second power converter (126) comprises:
a rectifier (128) having alternating current AC terminals (138a, 138b, 138c) electrically connectable to the power grid (200), and direct current DC terminals, and
an inverter (134) having AC terminals (140a, 140b, 140c) electrically connected to the second stator winding, and DC terminals electrically connected to the DC terminals of the rectifier by a DC link.

4. A rotating stabiliser (100) according to any preceding claim, further comprising a controller (142) adapted to control operation of the second power converter (126).

5. A rotating stabiliser (100) according to claim 4, wherein the controller (142) is adapted to control operation of the second power converter (126) based on the voltage at the second terminals (140a, 140b, 140c) of the second power converter (126) and the power grid voltage.

6. A rotating stabiliser (100) according to claim 4 or claim 5, wherein the controller (142) is adapted to control operation of the second power converter (126) during a starting sequence of the rotating stabiliser (100) where:
the second power converter (126) is operated in a motoring mode to supply power from the power grid (200) to the second stator assembly (118) so that the starter/exciter (116) is operated as a motor to rotate the first rotor assembly (104) of the synchronous condenser (102) from standstill to a predefined rotational speed that is higher than a rated rotational speed of the synchronous condenser (102),
when the synchronous condenser (102) reaches the predefined rotational speed, the second power converter (126) is stopped, and
the second power converter (126) is subsequently re-started and operated in a voltage control mode to control the excitation of the first rotor winding.

7. A method of operating a rotating stabiliser (100) according to any of claims 1 to 3, the method comprising:
during a starting sequence of the rotating stabiliser (100):
operating the second power converter (126) in a motoring mode to supply power from the power grid (200) to the second stator assembly (118) so that the starter/exciter (116) is operated as a motor to rotate the first rotor assembly (108) of the synchronous condenser (102) from standstill to a predefined rotational speed that is higher than a rated rotational speed of the synchronous condenser (102),
when the synchronous condenser (102) reaches the predefined rotational speed, stopping the second power converter (126), and
synchronising the synchronous condenser (102) to the power grid (200).

8. A method according to claim 7, further comprising during the starting sequence of the rotating stabiliser (100), re-starting the stopped second power converter (126) and operating the second power converter (126) in a voltage control mode to control the excitation of the first rotor winding during the starting sequence.

9. A method according to claim 8, further comprising during the starting sequence of the rotating stabiliser (100), operating the re-started second power converter (126) in the voltage control mode while synchronising the synchronous condenser (102) to the power grid (200).

10. A method according to any of claims 7 to 9, further comprising operating the second power converter (126) in a voltage control mode to control the excitation of the first rotor winding during normal operation of the rotating stabiliser (100).
